# EUROPÄISCHE PATENTANMELDUNG

(11) **EP 4 410 445 A1**
(43) Veröffentlichungstag der Anmeldung: **07.08.2024**
(21) Anmeldenummer: 23154171.5
(22) Anmeldetag: 31.01.2023
(51) Int. Cl.: B21D 19/08, B21D 41/02, C21D 7/02, C21D 7/12, B23P 9/02

(54) **VERFAHREN UND FORMVORRICHTUNG ZUM AUFWEITEN EINES ROHRS**

(71) Anmelder: Benteler Steel/Tube GmbH & Co. KG, 33104 Paderborn (DE)
(72) Erfinder: Rose, Leonhard, 33178 Borchen (DE); Krux, Rainer, 33102 Paderborn (DE); Wellpott, Marcel, 33102 Paderborn (DE); Brabander, Helwig, 33104 Salzkotten (DE)
(74) Vertreter: Griepenstroh, Jörg

(57) **Zusammenfassung**

Eine Formvorrichtung 1 wird zum Aufweiten eines Rohres 2 verwendet, wobei das Rohrs 2 relativ zu der Formvorrichtung 1 positioniert wird, die ein Außenwerkzeug 3 und wenigstens ein Innenwerkzeug 4 umfasst. Das oder eines der Innenwerkzeuge 4 weist einen Aufweitkegel 5 auf, um das Rohr 2 in einem Kegelformbereich 22 durch axiales Verlagern aufzuweiten. Das Innenwerkzeug 4 oder ein weiteres Innenwerkzeug weist ein Spreizwerkzeug 6 auf, um das Rohr 2 in einem dem Kegelformbereich 22 benachbarten Spreizbereich 15 anschließend radial innenseitig plastisch umformend aufzuweiten, während das Außenwerkzeug 3 das Rohr 2 in dem Spreizbereich 15 umschließt. Das Verfahren verbessert die Eigenspannungsverteilung des Rohrs durch Reduzierung von in Umfangsrichtung orientierten Zugeigenspannungen im Spreizbereich.

## Beschreibung

Die Erfindung betrifft ein Verfahren zum Aufweiten eines Rohrs gemäß den Merkmalen des Patentanspruches 1 sowie eine Formvorrichtung zur Durchführung des Verfahrens gemäß den Merkmalen des Patentanspruches 12.

Aufgeweitete Rohrenden, insbesondere von druckbeaufschlagten Leitungsrohren, wie z.B. Hydraulik- und Pneumatikleitungsrohre (HPL-Rohre), sind besonders rissempfindlich und müssen über die Lebensdauer dicht und schadensfrei bleiben. Dies gilt besonders bei Druckwechselbelastungen durch das Medium/Fluid, wobei schon kleinste Risse über die Betriebsdauer wachsen und schließlich zum Versagen des Rohrs bzw. zu einem Schadensfall im Feld führen können.

Das Aufweiten von metallischen Rohren erfolgt beispielsweise, um Endbereiche der Rohre an weitere Bauteile anzupassen, z.B. Anschlüsse oder um Rohre unterschiedlicher Durchmesser miteinander zu verbinden zu können. Es ist bekannt, metallische Rohre aus Stahl unter Verwendung eines Aufweitkegels aufzuweiten, wobei eine axiale Bewegung des Aufweitkegels in das Rohrende erfolgt. Das Aufweiten kann auch mittels rotierender kegelförmiger Werkzeuge erfolgen.

Das axiale Aufweiten erzeugt Normalspannungen in Umfangsrichtung. Diese Normalspannungen sind relevant im Hinblick auf die Bewertung des Werkstoffversagens. Eine solche Bewertung ist insbesondere bei Leitungen, die einem hohen inneren Druck ausgesetzt sind, wichtig, z.B. bei HPL-Rohren. Alternativen zum rein axialen Aufweiten durch Aufweitkegel bei Raumtemperatur, wie z.B. eine Wärmebehandlung des Rohres, sind nur bedingt geeignet bzw. nicht ohne Weiteres geeignet, die Eigenspannungsverteilung im kritischen Bereich zu verbessern. Der apparative Aufwand und verfahrenstechnische Aufwand für eine Wärmebehandlung ist ungleich höher als bei einer Kaltumformung.

Der Erfindung liegt daher die Aufgabe zugrunde, ein kostengünstiges Verfahren aufzuzeigen, mit welchem sich die Eigenspannungsverteilung von aufgeweiteten Rohren verbessern lässt. Zudem soll eine geeignete Vorrichtung zur Durchführung des Verfahrens vorgeschlagen werden.

Diese Aufgabe wird bei einem Verfahren gemäß den Merkmalen des Patentanspruches 1 gelöst. Eine geeignete Vorrichtung zur Durchführung des Verfahrens ist Gegenstand des Patentanspruches 10.

Die Erfindung betrifft mithin ein Verfahren zum umformenden Aufweiten von metallischen Rohren, insbesondere aus Stahlwerkstoffen, bei dem die im Rohr erzeugte Eigenspannungsverteilung deutlich besser ist, d.h. weniger kritisch im Hinblick auf das Materialversagen als bei den im Stand der Technik bekannten Verfahren. Zur Lösung der Aufgabe wird eine spezielle Formvorrichtung verwendet, die eine Kaltumformung bei Raumtemperatur ermöglicht. Das Rohr wird relativ zu der Formvorrichtung positioniert, insbesondere in die Formvorrichtung eingeführt. Die nachfolgend verwendeten Begriffe "außen" und "innen" beziehen sich auf die radiale Außenseite und Innenseite des Rohrs. Ein Außenwerkzeug der Formvorrichtung wirkt an der Außenseite des Rohres. Ein Innenwerkzeug der Formvorrichtung greift an der Innenseite des Rohres an. Es kommt mindestens ein Innenwerkzeug zum Einsatz.

Das zuerst zum Einsatz kommende Innenwerkzeug besitzt einen Aufweitkegel, um das Rohr in einem am Rohr auszubildenden Kegelformbereich durch axiales Verlagern aufzuweiten. Hierfür wird das Innenwerkzeug in das Rohr eingeführt, indem der Aufweitkegel axial in Richtung des Rohres verlagert wird oder aber das Rohr in Richtung zum Aufweitkegel verschoben wird. Der Begriff "axial" bezieht sich sowohl auf die Längsachse des Aufweitkegels als auch auf die Längsachse des Rohres. Dementsprechend bezeichnet der Begriff "radial" die Raumrichtung senkrecht zur Axialrichtung des Rohres bzw. des Aufweitkegels.

Der Begriff "Kegel" betrifft insbesondere einen Kreiskegel mit kreisrunder Grundfläche. Der Kreiskegel ist insbesondere als Kegelstumpf ausgebildet. Maßgeblich ist die Funktion des Aufweitkegels, den Innendurchmesser des Rohrs durch Kontakt mit dem Aufweitkegel in die gewünschte Endgeometrie zu drücken. Die genaue Kontur des Kegelformbereiches wird durch die Mantelfläche des Aufweitkegels bestimmt. Die den Verlauf des Kegelmantels beschreibende Leitkurve ist im Sinne der Erfindung vorzugsweise gerade. Der Begriff "Aufweitkegel" im Sinne der Erfindung erfasst auch einen Kegelstumpf, dessen Leitkurve nicht geradlinig ist und zumindest bereichsweise eine Krümmung aufweist.

Nachdem der Aufweitkegel hergestellt wurde, erfolgt in einer zeitlich späteren Phase des Verfahrens eine plastische Umformung in einem Spreizbereich des aufgeweiteten Rohrs. Das plastische Umformen kann mit demselben Innenwerkzeug oder mit einem weiteren Innenwerkzeug durchgeführt werden. Bevorzugt kommt bei der Erfindung ein einziges Innenwerkzeug zum Einsatz, das einen Aufweitkegel und ein Spreizwerkzeug aufweist. Bei dieser Ausführungsform ist das Spreizwerkzeug dem Aufweitkegel in Einführrichtung des Innenwerkzeugs vorgelagert. Es handelt sich in diesem Fall um ein Kombinationswerkzeug. Das vorgelagerte Spreizwerkzeug ist mit dem Aufweitkegel gekoppelt, so dass durch Positionieren des Kegels bzw. des Spreizwerkzeugs auch der jeweils andere Werkzeugabschnitt eine vorgegebene Position einnimmt. Das Spreizwerkzeug wird durch das rein axiale Verlagern des Innenwerkzeugs immer vor dem Aufweitkegel in das Rohr eingeführt.

Das Spreizwerkzeug ist nicht dafür vorgesehen, eine axiale Kraft auf das Rohr auszuüben, wie es beim Aufweitkegel der Fall ist. Das Spreizwerkzeug wirkt ausschließlich in Radialrichtung. Es besitzt einen Außendurchmesser, der kleiner ist als der Innendurchmesser des Rohres, um es ohne Kontakt mit der Innenseite des Rohrs bis in einen Spreizbereich des Rohres einzuführen. Der Spreizbereich befindet sich benachbart zum Kegelformbereich, insbesondere angrenzend an den Übergangsbereich von der Kegelform zur zylindrischen Rohrform. Es wurde durch eigene FEM-Untersuchungen festgestellt, dass insbesondere in diesem Bereich erhöhte Zugeigenspannungen durch das Aufweiten mittels Aufweitkegel entstehen. Zugeigenspannungen an der Innenseite unter anschließender Belastung erhöhen die Rissgefahr bzw. können ein Risswachstum fördern.

Erfindungsgemäß wird nun nach dem Ausformen des Kegelformbereiches, also nachdem die Zugeigenspannungen erzeugt wurden, der Spreizbereich radial plastisch umformend aufgeweitet, und zwar nur von der Innenseite her. Das Außenwerkzeug ist dazu eingerichtet und ausgebildet, das Rohr in dem Spreizbereich zumindest teilweise, insbesondere vollumfänglich zu umschließen und radial außenseitig zu stützen. Das Außenwerkzeug nimmt die vom Spreizwerkzeug aufgenommene Kraft auf, so dass nur der Rohrbereich zwischen dem Spreizwerkzeug und dem Außenwerkzeug plastisch umgeformt werden kann. Die plastische Umformung erfolgt ausschließlich an einem inneren Umfangsbereich des Rohres durch eine rein radial nach außen gerichtete Spreizkraft des Spreizwerkzeuges. Das Ziel ist die lokale Plastifizierung des Rohrs zur Erzeugung einer verbesserten Eigenspannungsverteilung in dieser versagenskritischen Zone des Rohres. Das Rohr, das insbesondere aus Stahl besteht, kann nach der Druckbeaufschlagung, d.h. infolge der Kontaktpressungen zwischen Spreizwerkzeug und Rohr, und anschließender Entlastung des Spreizwerkzeuges zurückfedern. Dadurch werden innerhalb des Umfangsbereiches möglichst große Druckeigenspannungen im Rohr erzeugt. Die ursprünglichen Zugeigenspannungen werden abgebaut und es werden bevorzugt möglichst große Druckeigenspannungen an der Innenseite erzeugt. Wenn nun in einem Belastungsfall das Rohr unter hohem Innendruck steht, und dadurch Zugspannungen (Lastspannungen) in Umfangsrichtung erzeugt werden, überlagern sich die innendruckinduzierten Zugspannungen mit den Eigenspannungen an der Innenseite des Rohrs. Zu große Zugeigenspannungen würden zu einem Materialversagen führen. Es könnten sich Risse in der betreffenden Zone bilden. Mit den erfindungsgemäß erzeugten Druckeigenspannungen in der kritischen Zone kann das Rohr im Einsatzfall Stand halten und verhält sich im Hinblick auf das Materialversagen unter Betriebsbedingungen deutlich weniger kritisch.

Mittels eines einzigen Innenwerkzeugs wird ein zweistufiges Verfahren (Anformen und Spreizen) durchgeführt, um ein aufgeweitetes Rohr herzustellen, welches im Hinblick auf ein Vermeiden des Werkstoffversagens unter Betriebsbedingungen erheblich verbessert ist. Das Verfahren sieht in der zusätzlichen neuen Prozessphase nach dem rein axialen Aufweiten (Aufweitkegel) das radiale Spreizen vor, wobei das Spreizwerkzeug und der Aufweitkegel baulich und hinsichtlich ihrer Antriebe getrennte Innenwerkzeugkomponenten sein können.

Es ist auch möglich, mit einem ersten Innenwerkzeug, das nur den Aufweitkegel aufweist, das Aufweiten durchzuführen und mittels eines zweiten Innenwerkzeugs, das das Spreizwerkzeug aufweist, das zeitlich nachfolgende Spreizen durchzuführen. Hierfür wird das erste Innenwerkzeug aus dem aufgeweiteten Rohr herausgezogen und anschließend das zweite Innenwerkzeug mit dem Spreizwerkzeug eingeführt, um das radiale Aufweiten durchzuführen. Das Aufweiten und plastische Umformen durch Spreizen werden insbesondere in demselben Außenwerkzeug durchgeführt. Das Außenwerkzeug bleibt während beider Verfahrensschritte geschlossen.

Unabhängig davon, ob es Kombinationswerkzeug verwendet wird oder ob separate Werkzeuge verwendet werden, ist das Verfahren kostengünstig, bei Raumtemperatur durchführbar und leicht beherrschbar.

In einer Weiterbildung des Verfahrens ist vorgesehen, dass der Aufweitkegel während des Spreizens durch das Spreizwerkzeug in Kontakt mit dem Kegelumformbereich steht. Der Aufweitkegel wird gemäß dieser Weiterbildung der Erfindung in Kontakt mit der Innenseite des Rohres gehalten, um die Formgebung des Rohres zu verbessern, d.h. einen Verzug der Kegelform durch das Spreizen zu vermeiden. Zudem wird durch das Belassen des Aufweitkegels ein Spannungszustand quasi eingefroren, während bei vorzeitigem Rückzug des Aufweitkegels ein Rückfedern des Werkstoffs erfolgen könnte, was wiederum Einfluss auf die Normalspannungen haben könnte, ggf. mit negativen Einflüssen auf die Lebensdauer und Betriebsfestigkeit des Rohres.

Wenn zwei separate Innenwerkzeuge verwendet werden, d.h. ein Innenwerkzeug für das Aufweiten und ein weiteres Innenwerkzeug für das Spreizen, kann auch an dem Werkzeug für das Spreizen eine Stützfläche angeordnet sei, insbesondere in Kegelform, um während des Spreizens das Rückfedern des Werkstoffs zu verhindern. Die Stützfläche wird lediglich nicht als Aufweitkegel genutzt.

Wenn nur ein einziges Innenwerkzeug verwendet wird, ist der Aufweitkegel selbst mit dem Spreizwerkzeug verbunden, so dass beide Bauteile mittels eines Bewegungsvorgangs in das Rohr eingeführt werden können, wobei das Spreizwerkzeug stets vorgelagert ist. Der Aufweitkegel kann relativ zum Spreizwerkzeug axial verlagerbar sein, d.h. der Abstand zwischen Aufweitkegel und Spreizwerkzeug kann verändert werden. Dadurch besteht die Möglichkeit, zunächst das Spreizwerkzeug bis in den gewünschten Spreizbereich zu verlagern und anschließend den Aufweitkegel relativ zum Spreizwerkzeug zu verschieben, während das Spreizwerkzeug in der Anfangsposition verbleibt. Der Abstand zwischen dem Spreizwerkzeug und dem Aufweitkegel wird dabei so weit verringert, bis der Aufweitkegel einen vorgegebenen Abstand zum Spreizwerkzeug hat, insbesondere unmittelbar an dem Spreizwerkzeug anliegt. Nun kann das Spreizen durch das Spreizwerkzeug beginnen. Optional werden der Aufweitkegel und das Spreizwerkzeug in einem konstanten axialen Abstand zueinander angeordnet, wobei zunächst der Aufweitkegel den Kegelumformbereich ausformt, bis das Spreizwerkzeug seine finale Position im Spreizbereich erreicht.

Das Spreizwerkzeug für sich betrachtet, d.h. unabhängig davon, ob an dem Innenwerkzeug ein Aufweitkegel angeordnet ist, übt eine radial nach außen gerichtete Spreizkraft auf die Innenseite des Rohrs aus. Diese Spreizkraft wird insbesondere durch mehrere radial nach außen verlagerbare Spreizsegmente übertragen, die zum Spreizen gegen die Innenseite des Rohres gedrückt werden. Es handelt sich um mindestens zwei Spreizsegmente, vorzugsweise sind es zwei bis sechs Segmente, die an dem Spreizwerkzeug gehalten und geführt sind und rein radial von innen nach außen verlagerbar sind. Die Bewegung ist bevorzugt rein translatorisch und bidirektional, so dass die Spreizsegmente nach dem Spreizen wieder in ihre Ausgangsposition zurückgezogen werden können. Da der Außendurchmesser des Spreizwerkzeugs bei eingefahrene Spreizsegmenten kleiner ist als der Innendurchmesser des Rohrs, kann das Innenwerkzeug nach Abschluss der Umformung leicht aus dem Rohr zurückgezogen werden.

Die Umformung durch Spreizen erfolgt über eine axiale Spreizbereichslänge, die vorzugsweise dem 0,3- bis 3-fachen der Wanddicke des Rohres entspricht, insbesondere dem 0,4- bis 2-fachen, bevorzugt dem 0,5- bis 1,5-fachen der Wanddicke des Rohres. Ein möglicher Anwendungsfall für die Erfindung sind Hydraulikleitungen mit 37 Grad-Anschluss bei Außendurchmessern von 30 bis 50 mm und Wanddicken von 3 bis 6 mm. Bevorzugt werden die Werkstoffgüten E235, E355, S460 bzw. übliche HPL-Güten, z.B. HPL 500. Bei einer Spreizbereichslänge von beispielsweise 3 mm und einer Wanddicke von 3 mm haben sich in eigenen Untersuchungen sehr gute Ergebnisse ergeben, wobei auch im Bereich von 1 bis 5 mm gute Ergebnisse für die Verbesserung der Eigenspannungszustände erreicht wurden. Ist die axiale Spreizbereichslänge zu kurz, besteht die Gefahr, dass nicht alle unerwünschten Eigenspannungszustände eliminiert werden können. Ist die Spreizbereichslänge wesentlich länger, werden keine verbesserten Ergebnisse im Hinblick auf den Eigenspannungszustand erreicht, da die Eigenspannungen sehr begrenzt im Übergangsbereich vom konischen Bereich zum rohrförmigen Bereich entstehen. Zudem sind mit zunehmender Länge größere Umformkräfte erforderlich. Der Spreizbereich liegt im hinsichtlich der Spannungszustände versagenskritischen Bereich des aufgeweiteten Rohrs. Der Spreizbereich befindet sich bevorzugt unmittelbar benachbart zum Kegelformbereich, allerdings nicht im Kegelformbereich. Der Spreizbereich endet dort, wo die Umformung durch den Aufweitkegel am Rohr zu erkennen ist. Der Abstand zwischen dem Kegelformbereich und dem Spreizbereich beträgt bevorzugt null mm. Insbesondere ist der Abstand kleiner als das Zweifache der Wanddicke des umzuformenden Rohrs, wobei der Abstand abhängig ist von der eingesetzten Stahlgüte, insbesondere von den Werkstoffeigenschaften, d.h. von der Dehngrenze bzw. der Rückfederung. In jedem Fall befindet sich der Spreizbereich in einem zylindrischen Bereich des Rohrs bzw. in einem Bereich mit geradliniger axialer Achse.

Die Verlagerung der Spreizsegmente erfolgt insbesondere über einen hydraulischen Antrieb, der gesteuert oder geregelt wird, und insbesondere erfolgt die Verlagerung hydraulik-druckgesteuert. Der Hub der translatorischen Bewegung der Spreizsegmente in radialer Richtung kann ca. 0,5 bis 2 mm betragen, bezogen auf Wanddicken von z.B. 3 bis 6 mm des Rohrs. Die translatorische Bewegung der Spreizsegmente wird insbesondere über Keilflächen realisiert. Hierzu wird ein Spreizdorn, der den Aufweitkegel durchsetzt, axial verlagert. Schrägflächen am Spreizdorn und/oder den Spreizsegmenten bewirken eine Umlenkung der axial gerichteten Kraft in eine radial gerichtete Bewegung der Spreizsegmente. Vorzugsweise ist die Geometrie aller Spreizsegmente identisch. Bei beispielsweise 6 Innensegmenten mit jeweils 60° Sektorwinkel werden insgesamt 360° der Umfangsrichtung des Rohres abgedeckt. Mit der Erfindung ist es optional möglich, unterschiedlich große Spreizkräfte über den Umfangsbereich auszuüben, so dass Umfangszonen in unterschiedlich starker plastischer Umformung ausgebildet werden. Ein Anwendungsfall hierfür ist eine Teilungsebene eines Außenwerkzeugs, das beispielsweise aus zwei Klemmbacken besteht. Die Steifigkeit des Außenwerkzeugs, in Umfangsrichtung betrachtet, variiert geringfügig. Sollte das Außenwerkzeug bereichsweise etwas nachgiebiger sein, könnte durch entsprechend ausgestaltete Spreizsegmente in diesem Bereich eine höhere Spreizkraft von innen ausgeübt werden, so dass sich im Bereich der Innenumfangszone im Bereich der Teilungsebene eine andere plastische Umformung einstellt, mit dem Ziel, den Eigenspannungszustand zu verbessern.

Grundsätzlich ist bei dem erfindungsgemäßen Verfahren vorgesehen, dass der Außendurchmesser des Rohrs gleichbleibt. Das Außenwerkzeug besitzt daher vorzugsweise mehrere über den Außenumfang verteilt angeordnete radial verlagerbare Außenwerkzeugsegmente, insbesondere 2 bis 6, welche das Rohr beim Spreizen umschließen, so dass der Außendurchmesser des Rohres im Spreizbereich gleichbleibt. Die Anzahl der Außenwerkzeugsegmente ist insbesondere identisch zu der Anzahl der Spreizsegmente. Die Außenwerkzeugsegmente können das Rohr gleichzeitig gegen axial angreifende Kräfte abstützen, wenn das Rohrende durch den Aufweitkegel geweitet wird.

Während der Außenumfang des Rohrs gleichbleiben soll, ist es mittels des Spreizwerkzeuges möglich, Umfangszonen mit in geometrischer Hinsicht unterschiedlich großer plastischer Umformung auszubilden, indem Spreizsegmente verwendet werden, die eine voneinander abweichende Geometrie aufweisen. Ergänzend zu einer Steuerung des Spreizwerkzeugs können optional nicht identische Spreizsegmente verwendet werden, die ebenfalls dazu beitragen können, unterschiedlich große oder unterschiedlich starke plastische Umformungen im Umfangsbereich auszubilden. Mittels des Spreizwerkzeugs können daher in Umfangsrichtung des Spreizbereichs unterschiedlich große Spreizkräfte in Radialrichtung ausgeübt werden, so dass Umfangszonen mit unterschiedlich starker plastischer Umformung ausgebildet werden. Jedes Spreizsegment kann eine in Axialrichtung oder Umfangsrichtung betrachtet nicht-symmetrische Geometrie aufweisen und die Spreizsegmente können in Axialrichtung oder Umfangsrichtung betrachtet verschiedene Geometrien aufweisen, wodurch Umfangszonen mit unterschiedlich großer plastischer Umformung ausgebildet werden.

Hierdurch können fertigungsbedingte Inhomogenitäten der Rohrkontur berücksichtigt und kompensiert werden, z.B. Abweichungen der Innenkontur des Rohres von der idealen Kreiskontur oder andere geometrische Abweichungen.

Der durch das Aufweiten entstehende Kegelformbereich ist vorzugsweise, allerdings nicht zwangsläufig der äußerste Endabschnitt des Rohrs. Der Aufweitkegel kann insbesondere tiefer in das Rohr eingeführt werden als der kegelförmige Bereich des Aufweitkegels lang ist, um einen Aufweitkegel im Abstand vom Ende des Rohrs auszubilden. Das aufgeweitete Material fließt an der Grundfläche bzw. dem Kragen des Aufweitkegels vorbei, so dass ein zylindrischer Bereich am Ende des Rohrs entsteht. Mit dem Verfahren kann daher auch ein Übergangsbereich zwischen zwei unterschiedlichen Durchmesserbereichen des Rohrs gebildet werden. Auf den Kegelformbereich folgt der Spreizbereich.

Die genaue Formgebung des Kegelformbereichs kann durch entsprechende Außenwerkzeuge beeinflusst werden. Das Außenwerkzeug bzw. die Außenwerkzeugsegmente können einen kegelförmigen Stützabschnitt aufweisen, wobei der Aufweitkegel den Kegelformbereich des Rohrs zumindest auf einem Teil seiner axialen Länge gegen den Stützabschnitt presst. Der Stützabschnitt kann auch an einem separaten Stützwerkzeug ausgebildet sein, das von den Außenwerkzeugsegmenten getrennt ist.

Die Außenwerkzeugsegmente können einen dem Kegelformbereich des Rohrs vorgelagerten zylindrischen Stützbereich aufweisen, um einen rohrförmigen Endabschnitt am Rohr auszubilden. Der Aufweitkegel kann auch um einen radial nach außen vorstehenden Kragenbereich ergänzt werden, um einen umlaufenden Flansch am Rohrende zu erzeugen.

Der gegenständliche Teil der Erfindung betrifft eine Formvorrichtung zur Durchführung des Verfahrens. Die Formvorrichtung besitzt wenigstens ein Innenwerkzeug, um ein Rohr durch plastisches Umformen von radial innen bereichsweise aufzuweiten. Das Innenwerkzeug weist einen Aufweitkegel auf, der dazu eingerichtet und ausgebildet ist, an dem Rohr einen Kegelformbereich durch axiales Verlagern relativ zum Rohr auszuformen. Das Innenwerkzeug weist darüber hinaus ein Spreizwerkzeug auf, das dem Aufweitkegel vorgelagert ist. Alternativ weist ein weiteres Innenwerkzeug das Spreizwerkzeug auf. Ein Außendurchmesser des Spreizwerkzeugs ist kleiner als ein Innendurchmesser des Rohrs und wobei das Spreizwerkzeug dazu eingerichtet und ausgebildet ist, das Rohr in einem dem Kegelformbereich benachbarten Spreizbereich radial innenseitig plastisch umformend aufzuweiten. Ein Außenwerkzeug der Formvorrichtung ist dazu eingerichtet und ausgebildet, das Rohr in dem Spreizbereich radial außenseitig abzustützen. Ein axial verlagerbarer Spreizdorn, welcher unmittelbar oder mittelbar, d.h. unter Eingliederung eines die Bewegungsrichtung des Spreizdorns übertragenden Zwischenbauteils, in Wirkeingriff mit Spreizsegmenten des Spreizwerkzeuges steht, dient dazu, die Spreizsegmente translatorisch radial gegen die Innenseite des Rohres zu drücken, um hier eine plastische Umformung durchzuführen.

Das Innenwerkzeug ist bevorzugt ein Kombiwerkzeug, umfassend ein Spreizwerkzeug und einen Aufweitkegel. Beide Teilwerkzeuge sind miteinander verbunden. Sie befinden sich in unterschiedlichen Längenabschnitten des Innenwerkzeugs und dienen zur Bearbeitung unterschiedlicher Längenbereiche des Rohrs. Hierfür befindet sich das Spreizwerkzeug in einem axialen Abstand vom Kegelbereich, der größer oder gleich null mm ist und das 3-fache der Wanddicke des umzuformenden Rohres nicht überschreitet. Vorstehend wurde erläutert, dass der im Hinblick auf die Eigenspannungszustände zu optimierende Bereich, insbesondere im Übergangsbereich, benachbart dem konischen bzw. kegelförmigen Bereich angeordnet ist. Dementsprechend befindet sich der Spreizbereich und somit das Spreizwerkzeug möglichst nah benachbart zum Aufweitkegel.

Alternativ sind ein erstes Innenwerkzeug mit dem Aufweitkegel und ein zweites Innenwerkzeug mit dem Spreizwerkzeug vorgesehen.

Der kleinste Durchmesser des Kegelstumpfes des Aufweitkegels ist etwa so groß wie der Außendurchmesser des Spreizwerkzeuges. Das Spreizwerkzeug besitzt Spreizsegmente, die eine axiale Spreizbereichslänge besitzen. Die axiale Spreizbereichslänge beschreibt den Wirkbereich, über welchen die Spreizsegmente mit einem ringförmigen Bereich der Innenseite des Rohrs in Kontakt kommen. Diese Spreizbereichslänge beträgt etwa das 0,3 bis 3-fache einer Wanddicke des umzuformenden Rohres. Zur Vermeidung von Spannungsspitzen besitzen die Spreizelemente vorzugsweise in gerundete Endbereiche. Hierbei handelt es sich um die axialen Endbereiche.

In einer weiteren Ausführungsform der Erfindung besitzen die Spreizsegmente in Umfangsrichtung betrachtet eine aufeinander abweichende Geometrie, um Umfangszonen mit unterschiedlicher plastischer Umformung auszubilden.

Das Außenwerkzeug, das dazu ausgebildet ist, den Stützbereich abzustützen, kann zudem endseitig einen kegelförmigen Stützabschnitt aufweisen, der zur Formgebung des Kegelformbereiches während des Aufweitens durch den Aufweitkegel dient. Der kegelförmige Stützabschnitt ist dem Spreizbereich vorgelagert und dient dazu, den Übergangsbereich zwischen dem Kegelformbereich und Spreizbereich zu definieren, z.B. bezüglich des Radius an der Außenseite des Rohrs, oder auch um den Verzug beim anschließenden Spreizen zu vermeiden.

Ergänzend kann sich an den Stützabschnitt des Außenwerkzeugs ein rohrförmiger Endabschnitt anschließen. Der Stützabschnitt und der rohrförmige Endabschnitt bestimmen die Außenkontur des Rohrs, indem bei der Umformung durch den Aufweitkegel das nach radial außen hin verdrängte Material innerhalb des Außenwerkzeuges umgeleitet wird und einen geometrisch definierten zylindrischen Endbereich bildet. Hierzu wird der Aufweitkegel entsprechend tief in den Endbereich des Rohrs eingeführt.

Die Formvorrichtung kann auch derart gestaltet sein, dass der Aufweitkegel einen umlaufenden Kragen aufweist zur Ausbildung eines 90° Flansches am äußeren Ende des kegelförmigen Bereiches als Alternative zu einem endseitigen Längenabschnitt mit konstantem Querschnitt.

Die erfindungsgemäße Vorrichtung dient der Verbesserung der Eigenspannungsverteilung, d.h. zur Verringerung der Zugeigenspannung in einer versagenskritischen Zone des Rohrs, d.h. im Spreizbereich. Die verbesserten Eigenschaften des hergestellten Erzeugnisses reduzieren das Risiko des Werkstoffversagens durch Rissbildung an einer Innenseite des Rohres unter Betriebsbedingungen (Einsatzfall). Der Anwendungs- bzw. Produktschwerpunkt betrifft die endseitige Formgebung von Hydraulikleitungen mit 37°-Anschluss. Die erfindungsgemäße Formvorrichtung bzw. das erfindungsgemäße Verfahren eignet sich insbesondere für Rohre mit Außendurchmessern von 30 bis 50 mm bei Wanddicken von 3 bis 6 mm.

Die Erfindung wird nachfolgend anhand von in schematischen Zeichnungen dargestellten Ausführungsbeispielen näher erläutert. Es zeigen:
- Figur 1: eine Formvorrichtung im Längsschnitt vor der Umformung;
- Figur 2: die Formvorrichtung der Figur 1 im Querschnitt durch den Spreizbereich;
- Figur 3: die Formvorrichtung der Figur 1 bei geschlossenem Außenwerkzeug, Darstellung im Längsschnitt;
- Figur 4: einen Querschnitt durch das Außenwerkzeug im geschlossenen Zustand;
- Figur 5: einen Längsschnitt durch die Formvorrichtung der Figuren 1 und 3 nach Abschluss des Aufweitvorgangs;
- Figur 6: eine weitere Ausführungsform eines Formbauteils im Querschnitt bei geöffnetem Außenwerkzeug;
- Figur 7: das Formwerkzeug der Figur 6 bei geschlossenem Außenwerkzeug vor dem Ausformen des Kegelformbereiches;
- Figur 8: das Formwerkzeug der Figuren 6 und 7 nach dem Ausformen des Kegelform bereiches;
- Figur 9: einen Längsschnitt durch ein Formwerkzeug gemäß einer weiteren Ausführungsform des Außenwerkzeugs;
- Figur 10: eine weitere Ausführungsform eines Formwerkzeugs im Längsschnitt mit einem Aufweitkegel, der einen zylindrischen und einen kegelförmigen Längenabschnitt aufweist;
- Figur 11: eine weitere Ausführungsform einer Formvorrichtung mit einem Aufweitkegel, an den ein im Durchmesser vergrößerter Stützbereich angeschlossen ist;
- Figur 12: eine weitere Ausführungsform einer Formvorrichtung mit einem Aufweitkegel, an einem ersten Innenwerkzeug und
- Figur 13: eine weitere Ausführungsform einer Formvorrichtung mit Spreizwerkzeug an einem zweiten Innenwerkzeug.

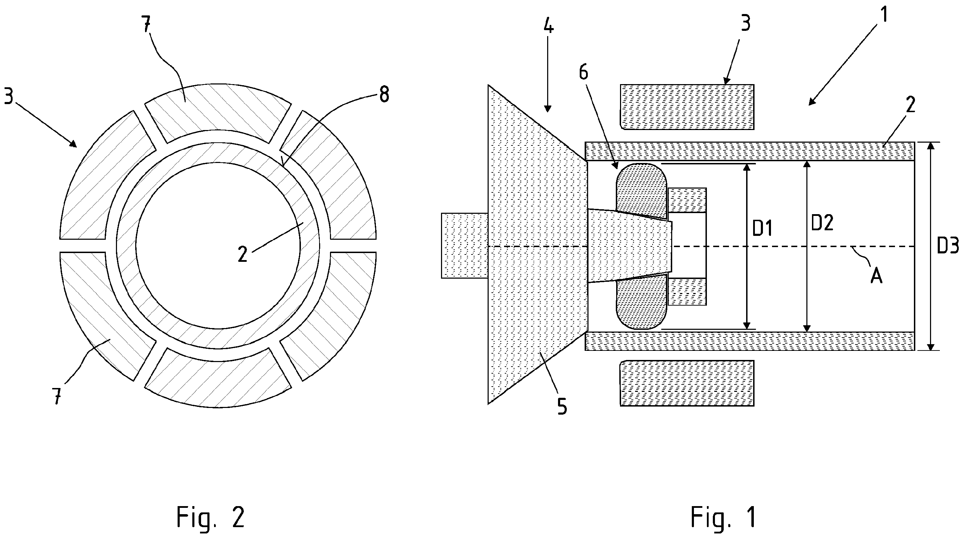

Die Figur 1 zeigt eine Formvorrichtung 1 zum Aufweiten eines Rohrs 2. Die Formvorrichtung 1 umfasst ein Außenwerkzeug 3, das in der Figur 2 im Querschnitt dargestellt ist. Die Formvorrichtung 1 umfasst ferner ein Innenwerkzeug 4, das zwei Funktionsbereiche aufweist: einen Aufweitkegel 5 und ein dem Aufweitkegel axial vorgelagertes Spreizwerkzeug 6.

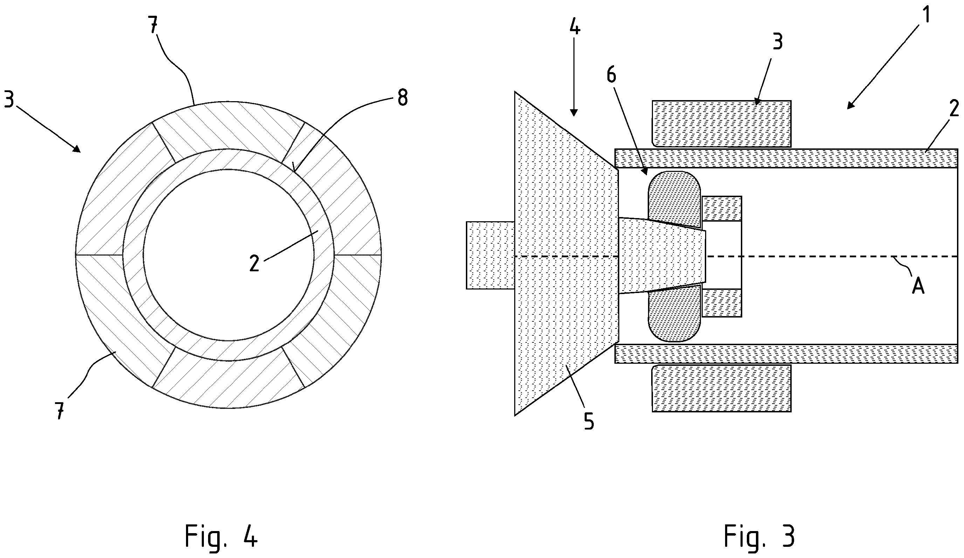

Zur Durchführung des Verfahrens wird das Rohr 2 in einem ersten Verfahrensschritt relativ zur Formvorrichtung 1 positioniert, d. h. innerhalb des Außenwerkzeugs 3 angeordnet. Das Außenwerkzeug 3 umfasst in diesem Ausführungsbeispiel mehrere radial verlagerbare Außenwerkzeugsegmente 7 (Figur 2), die sich jeweils über einen Umfangsbereich von 60° erstrecken. Die Außenwerkzeugsegmente 7 können radial nach innen verlagert werden und liegen dann an einer Außenseite 8 des Rohrs 2 an, um das Rohr 2 außenseitig zu stützen. Die Figur 4 zeigt die Außenwerkzeugsegmente 7 in der Anlageposition an der Außenseite 8 des Rohrs 2.

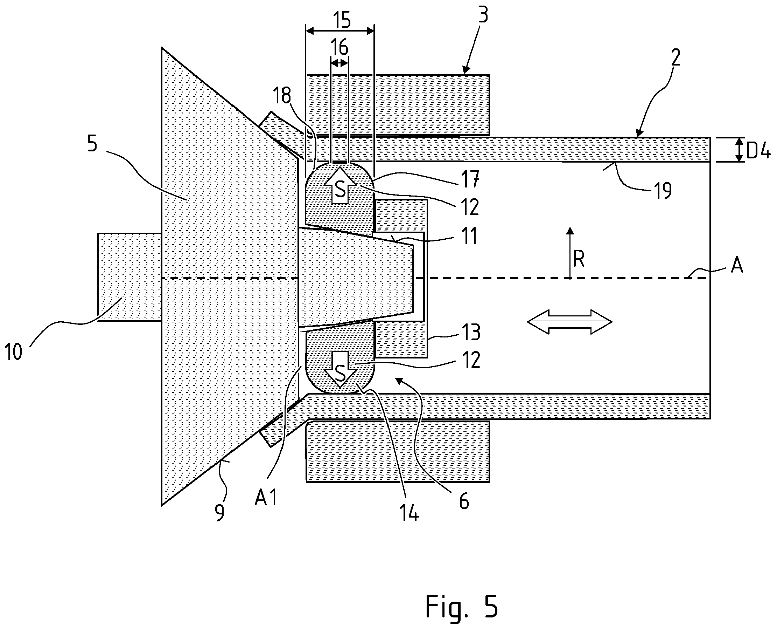

Nachdem das Außenwerkzeug 3 geschlossen wurde, wird der Aufweitkegel 5 axial in Richtung der Rohrachse A verlagert. Bei dem Aufweitkegel 5 handelt es sich geometrisch um einen Kegelstumpf mit kreiszylindrischer Grundfläche und geradliniger Kegelmantelfläche 9, die auf eine Kegelspitze zuläuft, welche auf der Längsachse A des Rohrs 2 liegen würde. Die sich im Durchmesser erweiternde Kegelmantelfläche 9 verdrängt den Werkstoff des Rohrs 2 und weitet das Rohr 2, wie es in Figur 5 dargestellt ist. Hierdurch kann beispielsweise an einem Rohr 2, das als Hydraulikleitung eingesetzt werden soll, ein 37°-Anschluss ausgebildet werden.

Anhand der Gegenüberstellung der Figuren 3 und 5 ist zu erkennen, dass das Spreizwerkzeug 6 seine relative Position in Bezug auf das Außenwerkzeug 3 beibehalten hat. Der Aufweitkegel 5 ist relativ zum Spreizwerkzeug 6 verlagerbar. Das Spreizwerkzeug 6 umfasst einen Spreizdorn 10, der in Axialrichtung verlagerbar ist. Der Spreizdorn 10 besitzt an seinem dem Rohr 2 zugewandten Ende Schrägflächen 11, auf denen mehrere radial verlagerbare Spreizsegmente 12 über den Umfang verteilt angeordnet sind. Vorzugsweise handelt es sich um zwei bis sechs Spreizsegmente 12. Bei diesem Ausführungsbeispiel sind alle Spreizsegmente 12 gleichmäßig konfiguriert. Ein Stützring 13 des Spreizwerkzeugs 6 führt die Spreizsegmente 12 bei ihrer translatorischen Bewegung in Radialrichtung R, d. h. senkrecht zur Längsachse A des Rohrs 2. Die radiale Verlagerung nach außen führt zu einer plastischen Umformung des inneren Umfangsbereichs 14 des Rohrs 2 in einem Spreizbereich 15. Als Spreizbereich 15 wird derjenige Bereich bezeichnet, in welchem das Spreizwerkzeug 6 angeordnet ist. Der tatsächlich umgeformte Bereich kann kleiner als der Spreizbereich 15 sein, d. h. eine geringere axiale Länge aufweisen. Die axiale Spreizbereichslänge 16 erstreckt sich bei diesem Ausführungsbeispiel über eine axiale Länge, die etwa der Wanddicke D des Rohrs entspricht. Die radiale Eindringtiefe der Spreizsegmente 12 in das Rohr 2 ist stets geringer als die Wanddicke D4 und beträgt vorzugsweise 10 % bis 50 % der Wanddicke D4, je nach Material des Rohrs 2 und dessen Rückfedereigenschaften.

Das Spreizen erfolgt mittels der Spreizsegmente 12, die jeweils gerundete Endbereiche 17, 18 in Axialrichtung betrachtet besitzen, sodass durch das Spreizen, d.h. die plastische Umformung keine scharfkantigen Übergänge an der Innenseite 19 des Rohrs 2 entstehen.

Nach dem Spreizen wird der Spreizdorn 10 wieder zurückgezogen. Die Spreizsegmente 12 werden wieder nach axial innen verlagert und nehmen ihren ursprünglichen Außendurchmesser D1 an (Figur 1). Der Außendurchmesser D1 ist kleiner als der Innendurchmesser D2 des Rohrs 2.

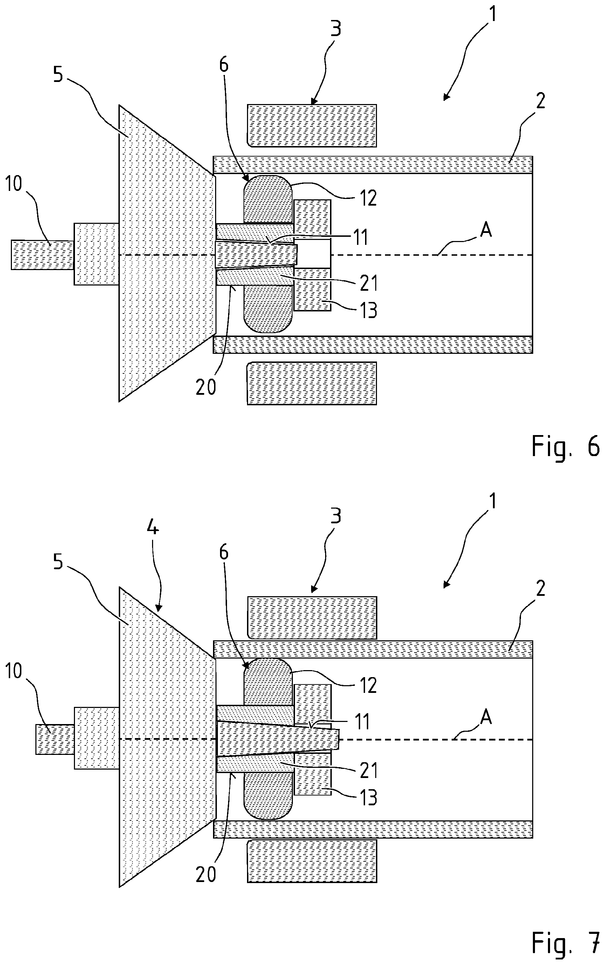

Die Figuren 6 bis 11 zeigen weitere Ausführungsbeispiele der Erfindung. Für im Wesentlichen funktionsgleiche Komponenten werden die zu den Figuren 1 bis 5 eingeführten Bezugszeichen beibehalten.

Die Figuren 6 bis 11 zeigen Ausführungsbeispiele, die sich zunächst durch die Konfiguration des Spreizwerkzeugs 6 von dem Ausführungsbeispiel der Figuren 1 bis 5 unterscheiden. Das Spreizwerkzeug 6 der Figuren 6 bis 11 ist so konfiguriert, dass die Schrägflächen 11 des Spreizdorns 10 nicht in unmittelbaren Kontakt mit den Spreizsegmenten 12 stehen, sondern mit keilförmigen Gleitstücken 21 im Kontakt stehen. Die Gleitstücke 21 besitzen innenseitig Schrägflächen und außenseitig Anlageflächen 20 für den Kontakt mit den Spreizsegmenten 12. Die außenseitigen Anlageflächen 20 verlaufen anders als die Schrägflächen 12 parallel zur Längsachse A des Rohrs bzw. des Innenwerkzeugs 4. Auf diese Weise werden die Spreizelemente 12 rein radial belastet. Sie stützen sich an den zylindersegmentförmigen Anlageflächen ab und werden durch den Stützring 13 radial geführt. Der Stützring 13 kann entfallen, wenn der Spreizdorn sich in die entgegengesetzte Richtung verjüngt, also zum Spreizen in den Aufweitkegel 5 gezogen wird. Der Aufweitkegel 5 dient in diesem Fall als radiale Führung.

Die funktionale Trennung der Gleitflächen von den Spreizelementen 12 ermöglicht es, für die Spreizsegmente 12 und die Gleitstücke 19 unterschiedliche Werkstoffe einzusetzen, die auf den jeweiligen Belastungsfall optimal angepasst sind.

Die Figur 7 zeigt rein exemplarisch, wie der Spreizdorn 10 in Axialrichtung verlagert wurde, um zu verdeutlichen, dass auf diese Weise die Gleitstücke 21 nach radial außen verlagert werden und dabei die an den Gleitstücken 21 außen anliegenden Spreizsegmente 12 nach außen gegen die Innenseite 19 des Rohrs drängen.

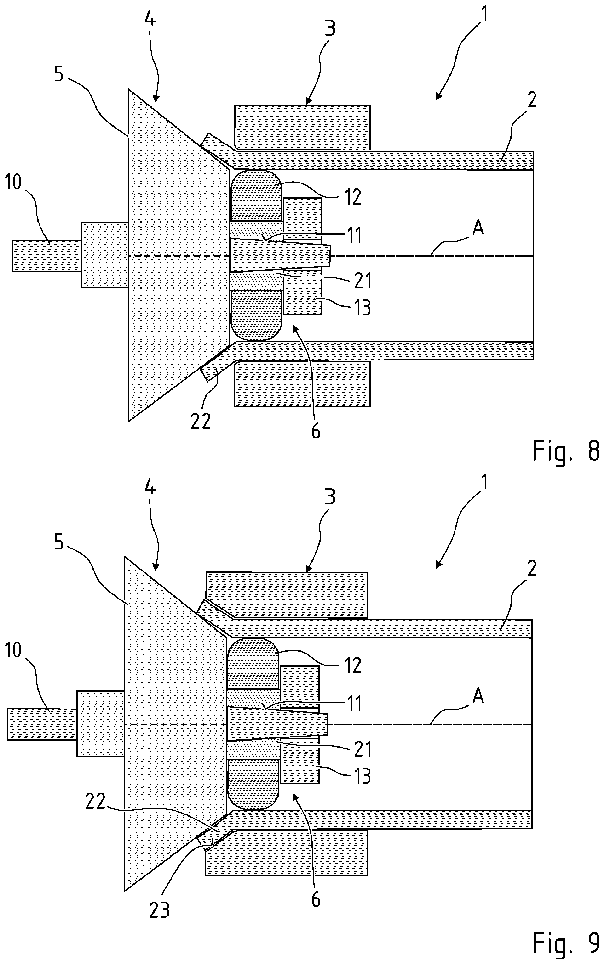

Die Figur 8 zeigt das aufgeweitete Rohr 2 im Formwerkzeug 1 mit dem durch den Aufweitkegel 5 hergestellten Kegelformbereich 22. Der Kegelformbereich 22 wird ohne äußere Abstützung durch freies Ausformen gebildet.

In einer Weiterbildung der Erfindung gemäß der Figur 9 besitzt das Außenwerkzeug 3 zusätzlich einen kegelförmigen Stützabschnitt 23, der zur Formgebung der Außenseite des Kegelformbereichs 22 vorgesehen ist. Der Aufweitkegel 5 drängt das Rohrs 2 gegen den Stützabschnitt 23 des geschlossenen Außenwerkzeugs 3, um die gewünschte Rohrgeometrie präzise zu definieren. Anschließend wird der innere Umfangsbereich 14 des Rohrs 2 durch das Spreizwerkzeug 6 bearbeitet, um den Eigenspannungszustand an der Innenseite 19 des Rohrs 6 zeitlich nach dem Aufweiten durch den Aufweitkegel 5 zu optimieren.

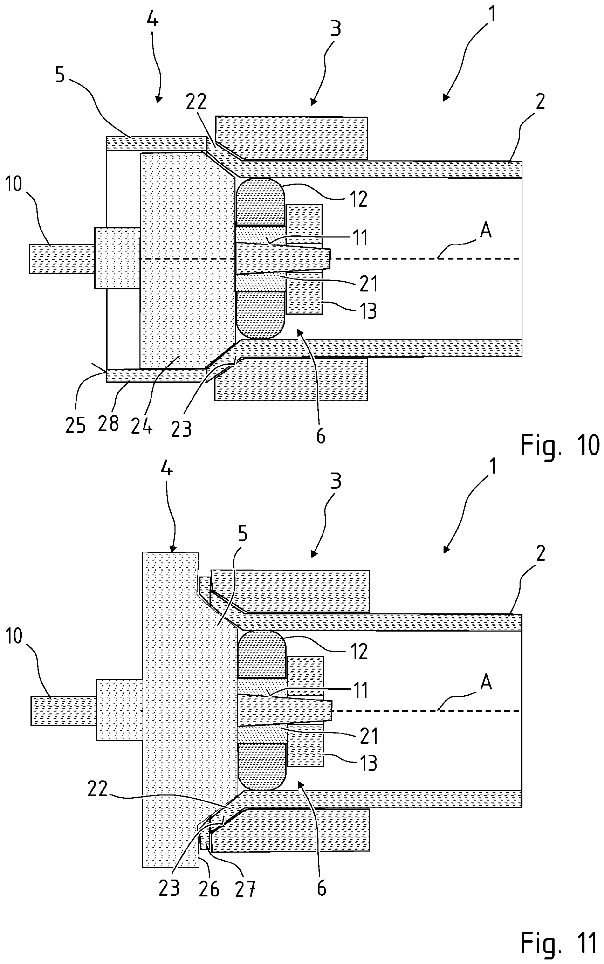

Das Ausführungsbeispiel der Figur 10 zeigt eine weitere Variante einer Formvorrichtung 1, wobei das Außenwerkzeug 3 der Figur 9 zum Einsatz kommt. Darüber hinaus ist der Aufweitkegel 5 um einen zylindrischen Abschnitt 24, angrenzend an eine Grundfläche des kegelförmigen Abschnitts verlängert. Dadurch wird ein abgestufter Übergangsbereich im Abstand vom Ende 25 des Rohrs 2 hergestellt. Das Innenwerkzeug 4 wurde hierfür tiefer in das Rohr 2 eingeführt. Als Übergangsbereich wird der sich trichterförmig erweiternde Bereich des Rohrs 2 bezeichnet.

Das Ausführungsbeispiel der Figur 11 unterscheidet sich von demjenigen der Figur 9 dadurch, dass das Innenwerkzeug 4 an seinem Aufweitkegel 5 einen im Durchmesser erweiterten Kragenbereich 26 besitzt. Er ist dazu vorgesehen, einen um 90° nach außen abgewinkelten Flansch 27 am Rohr 2 auszuformen. Der Rohrwerkstoff, der durch den eindringenden Aufweitkegel 5 nach außen gedrängt wird, stößt gegen den Kragenbereich 26, so dass der gewünschte Flansch 27 entsteht.

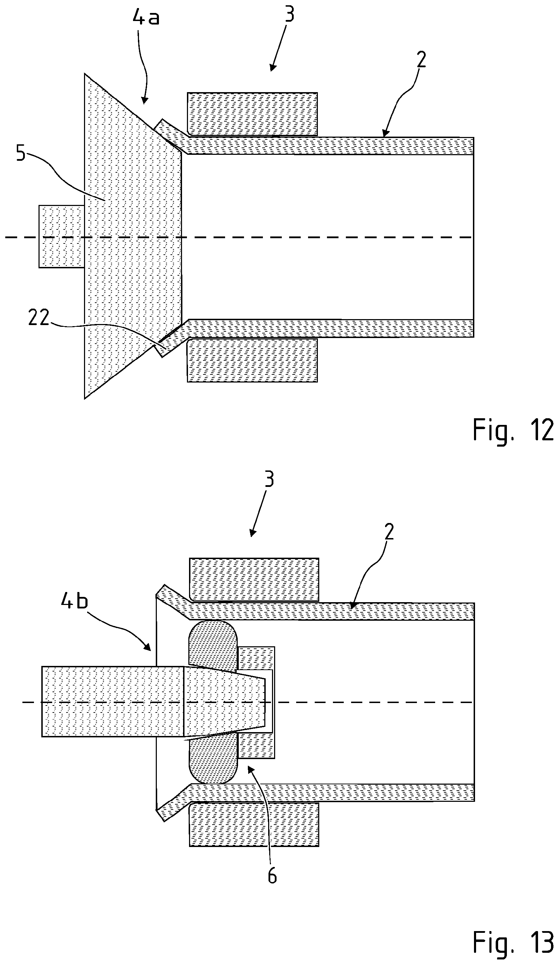

Die Figur 12 zeigt ein erstes Innenwerkzeug 4a das nur einen Aufweitkegel 5 besitzt und kein Spreizwerkzeug. Die Figur 13 zeigt ein weiteres Innenwerkzeug 4b, das nur das Spreizwerkzeug 6 besitzt und keinen Aufweitkegel. Nach dem Schließen des Außenwerkzeugs 3 wird zunächst des erste Innenwerkzug 4a benutzt, um die Kegelmantelfläche 22 herzustellen (Figur 12). Anschließend wird das erste Innenwerkzeug 4a aus dem Rohr 2 entfernt. Danach wird das weitere Innenwerkzeug 4b in das zuvor aufgeweitete Rohr 2 eingesetzt und der Spreizvorgang wird durchgeführt. Während des Werkzeugwechsels bleibt das Außenwerkzeug 3 geschlossen.

In nicht näher dargestellter Weise schließt sich wie bei allen vorangegangenen Ausführungsbeispielen auch das nachträgliche plastische Umformen im Spreizbereich durch eine radial nach außen gerichtete Spreizkraft S an, die über das Spreizwerkzeug 6 aufgebracht wird.

### Bezugszeichen:

- 1 -: Formvorrichtung
- 2 -: Rohr
- 3 -: Außenwerkzeug
- 4 -: Innenwerkzeug
- 4a -: Innenwerkzeug
- 4b -: Innenwerkzeug
- 5 -: Aufweitkegel
- 6 -: Spreizwerkzeug
- 7 -: Außenwerkzeugsegment
- 8 -: Außenseite von 2
- 9 -: Kegelmantelfläche von 5
- 10 -: Spreizdorn
- 11 -: Schrägfläche an 10
- 12 -: Spreizsegment
- 13 -: Stützring
- 14 -: innerer Umfangsbereich von 15
- 15 -: Spreizbereich
- 16 -: axiale Spreizbereichslänge von 12
- 17 -: gerundeter Endbereich 12
- 18 -: gerundeter Endbereich 12
- 19 -: Innenseite von 2
- 20 -: Anlagefläche von 21
- 21 -: Gleitstück
- 22 -: Kegelformbereich von 2
- 23 -: Stützabschnitt von 3
- 24 -: zylindrischer Abschnitt an 5
- 25 -: Ende von 2
- 26 -: Kragenbereich von 4
- 27 -: Flansch von 2
- 28 -: Endabschnitt von 2
- A -: Längsachse von 2
- A1 -: axialer Abstand zwischen 5 und 6
- D1 -: Außendurchmesser von 6
- D2 -: Innendurchmesser von 2
- D3 -: Außendurchmesser von 2
- D4 -: Wanddicke
- R -: Radialrichtung
- S -: Spreizkraft

## Patentansprüche

1. Verfahren zum Aufweiten eines Rohrs (2) mit folgenden Schritten:
a. Positionieren eines Rohrs (2) relativ zu einer Formvorrichtung (1), die ein Außenwerkzeug (3) und wenigstens ein Innenwerkzeug (4, 4a, 4b) umfasst, wobei ein erstes Innenwerkzeug (4, 4a) einen Aufweitkegel (5) aufweist, um das Rohr (2) in einem Kegelformbereich (22) durch axiales Verlagern aufzuweiten, und wobei das erste Innenwerkzeug (4, 4a) oder ein weiteres Innenwerkzeug (4b) ein Spreizwerkzeug (6) aufweist, dessen Außendurchmesser (D1) kleiner ist als der Innendurchmesser (D2) des Rohrs (2), und das dazu eingerichtet und ausgebildet ist, das Rohr (2) in einem dem Kegelformbereich (22) benachbarten Spreizbereich (15) radial innenseitig plastisch umformend aufzuweiten, wobei das Außenwerkzeug (3) dazu eingerichtet und ausgebildet ist, das Rohr (2) in dem Spreizbereich (15) wenigstens abschnittsweise zu umschließen;
b. Herstellen des Kegelformbereichs (22) des Rohrs (2) durch axiales Verlagern des Aufweitkegels (5) relativ zum Rohr (2);
c. Plastische Umformung einer Innenseite (19) des Rohrs (2) im Spreizbereich (15) durch eine radial nach außen gerichtete Spreizkraft (S) des Spreizwerkzeugs (6), während das Rohr (2) außenseitig durch das Außenwerkzeug (3) abgestützt wird.

2. Verfahren nach Anspruch 1, **dadurch gekennzeichnet, dass** der Aufweitkegel (5) während des Spreizens durch das Spreizwerkzeug (6) in Kontakt mit dem Kegelumformbereich (22) steht.

3. Verfahren nach Anspruch 1 oder 2, **dadurch gekennzeichnet, dass** der Aufweitkegel (5) relativ zum Spreizwerkzeug (6) axial verlagerbar ist, wobei zunächst das Spreizwerkzeug (6) in den Spreizbereich (15) verlagert wird und anschließend der Aufweitkegel (5) relativ zum Spreizwerkzeug (6) verlagert wird.

4. Verfahren nach Anspruch 1 oder 2, **dadurch gekennzeichnet, dass** der Aufweitkegel (5) und das Spreizwerkzeug (6) in einem konstanten axialen Abstand zueinander angeordnet sind, wobei zunächst der Aufweitkegel (5) den Kegelumformbereich (22) ausformt, bis das Spreizwerkzeug (6) seine Position im Spreizbereich (15) erreicht.

5. Verfahren nach einem der Ansprüche 1 bis 4, **dadurch gekennzeichnet, dass** das Spreizwerkzeug (6) mehrere radial nach außen verlagerbare Spreizsegmente (12) aufweist, insbesondere 2 bis 6 Spreizsegmente (12), die zum Spreizen gegen die Innenseite (19) des Rohrs (2) in dem Spreizbereich (15) gedrückt werden.

6. Verfahren nach einem der Ansprüche 1 bis 5, **dadurch gekennzeichnet, dass** die Umformung im Spreizbereich (15) über eine axiale Spreizbereichslänge (16) erfolgt, die dem 0,3- bis 3-fachen der Wanddicke (D4) des Rohrs (2) entspricht.

7. Verfahren nach einem der Ansprüche 1 bis 6, **dadurch gekennzeichnet, dass** das Außenwerkzeug (3) über den Außenumfang des Rohrs (2) verteilt mehrere radial verlagerbare Außenwerkzeugsegmente (7) aufweist, welche das Rohr (2) beim Spreizen umschließen.

8. Verfahren nach Anspruch 7, **dadurch gekennzeichnet, dass** ein kegelförmiger Stützabschnitt (23) entweder an den Außenwerkzeugsegmenten (7) oder an einem von den Außenwerkzeugsegmenten getrennten Stützwerkzeug vorgesehen sind, wobei der Aufweitkegel (5) den Kegelformbereich (22) des Rohrs (2) zumindest auf einem Teil seiner axialen Länge gegen den Stützabschnitt (23) presst.

9. Verfahren nach einem der Ansprüche 1 bis 8, **dadurch gekennzeichnet, dass** der Aufweitkegel (5) tiefer in das Rohr (2) eingeführt wird als der Aufweitkegel (5) in Axialrichtung lang ist, um einen nicht-kegeligen Endabschnitt (28) am Rohr (2) auszubilden.

10. Formvorrichtung (1) zur Durchführung des Verfahrens gemäß einem der Ansprüche 1 bis 9 mit folgenden Merkmalen:
a. Wenigstens ein Innenwerkzeug (4, 4a, 4b), um ein Rohr (2) durch plastische Umformung von innen radial bereichsweise aufzuweiten;
b. Das Innenwerkzeug (4) oder wenigstens eines der mehreren Innenwerkzeuge (4a) weist einen Aufweitkegel (5) auf, der dazu eingerichtet und ausgebildet ist, an dem Rohr (2) einen Kegelformbereich (22) durch axiales Verlagern relativ zum Rohr (2) auszuformen;
c. Das Innenwerkzeug (4) mit dem Aufweitkegel (5) weist ein Spreizwerkzeug (6) auf, das dem Aufweitkegel (5) vorgelagert ist, oder eines der weiteren Innenwerkzeuge (4b) weist das Spreizwerkzeug (6) auf, wobei ein Außendurchmesser (D1) des Spreizwerkzeugs (6) kleiner ist als ein Innendurchmesser (D2) des Rohrs (2), und wobei das Spreizwerkzeug (6) dazu eingerichtet und ausgebildet ist, das Rohr (2) in einem dem Kegelformbereich (22) benachbarten Spreizbereich (15) radial innenseitig plastisch umformend aufzuweiten;
d. Ein Außenwerkzeug (3), welches dazu eingerichtet und ausgebildet ist, das Rohr (2) in dem Spreizbereich (15) radial außenseitig abzustützen:
e. Ein axial verlagerbarer Spreizdorn (10), welcher im Wirkeingriff mit Spreizsegmenten (12) des Spreizwerkzeuges (6) steht, um die Spreizsegmente (12) radial gegen die Innenseite des Rohrs (2) zu drücken.

11. Formvorrichtung (1) nach Anspruch 10, **dadurch gekennzeichnet, dass** das Spreizwerkzeug (6) des Innenwerkzeugs (4, 4a), das den Aufweitkegel (5) aufweist, in einem axialen Abstand (A1) vom Aufweitkegel (5) angeordnet ist, der größer oder gleich null ist und das Dreifache einer Wanddicke (D4) des umzuformenden Rohrs (2) nicht überschreitet.

12. Formvorrichtung (1) nach Anspruch 10 oder 11, **dadurch gekennzeichnet, dass** die Spreizsegmente (12) eine axiale Spreizbereichslänge (16) besitzen, die dem 0,5- bis 3-fachen einer Wanddicke (D4) des umzuformenden Rohrs (2) entspricht.

13. Formvorrichtung (1) nach Anspruch 12, **dadurch gekennzeichnet, dass** die Spreizelemente (12) gerundete Endbereiche (17, 18) oder gefaste Endbereiche aufweisen.

14. Formvorrichtung (1) nach einem der Ansprüche 10 bis 13, **dadurch gekennzeichnet, dass** das Außenwerkzeug (3) einen kegelförmigen Stützabschnitt (23) aufweist, der zur Formgebung des Kegelformbereichs (22) während des Aufweitens durch den Aufweitkegel (5) bestimmt ist.

## Geänderte Patentansprüche

### Geänderte Patentansprüche gemäss Regel 137(2) EPÜ.

1. Verfahren zum Aufweiten eines Rohrs (2) mit folgenden Schritten:
a. Positionieren eines Rohrs (2) relativ zu einer Formvorrichtung (1), die ein Außenwerkzeug (3) und wenigstens ein Innenwerkzeug (4, 4a, 4b) umfasst, wobei ein erstes Innenwerkzeug (4, 4a) einen Aufweitkegel (5) aufweist, um das Rohr (2) in einem Kegelformbereich (22) durch axiales Verlagern aufzuweiten, und wobei das erste Innenwerkzeug (4, 4a) oder ein weiteres Innenwerkzeug (4b) ein Spreizwerkzeug (6) aufweist, dessen Außendurchmesser (D1) kleiner ist als der Innendurchmesser (D2) des Rohrs (2), und das dazu eingerichtet und ausgebildet ist, das Rohr (2) in einem dem Kegelformbereich (22) benachbarten Spreizbereich (15) radial innenseitig plastisch umformend aufzuweiten, wobei das Außenwerkzeug (3) dazu eingerichtet und ausgebildet ist, das Rohr (2) in dem Spreizbereich (15) wenigstens abschnittsweise zu umschließen;
b. Herstellen des Kegelformbereichs (22) des Rohrs (2) durch axiales Verlagern des Aufweitkegels (5) relativ zum Rohr (2);
c. Plastische Umformung einer Innenseite (19) des Rohrs (2) im Spreizbereich (15) durch eine radial nach außen gerichtete Spreizkraft (S) des Spreizwerkzeugs (6), während das Rohr (2) außenseitig durch das Außenwerkzeug (3) abgestützt wird;
**dadurch gekennzeichnet, dass**
d. der Aufweitkegel (5) und das Spreizwerkzeug (6) in einem konstanten axialen Abstand zueinander angeordnet sind, wobei zunächst der Aufweitkegel (5) den Kegelumformbereich (22) ausformt, bis das Spreizwerkzeug (6) seine Position im Spreizbereich (15) erreicht.

2. Verfahren nach Anspruch 1, **dadurch gekennzeichnet, dass** der Aufweitkegel (5) während des Spreizens durch das Spreizwerkzeug (6) in Kontakt mit dem Kegelumformbereich (22) steht.

3. Verfahren nach Anspruch 1 oder 2, **dadurch gekennzeichnet, dass** das Spreizwerkzeug (6) mehrere radial nach außen verlagerbare Spreizsegmente (12) aufweist, insbesondere 2 bis 6 Spreizsegmente (12), die zum Spreizen gegen die Innenseite (19) des Rohrs (2) in dem Spreizbereich (15) gedrückt werden.

4. Verfahren nach einem der Ansprüche 1 bis 3, **dadurch gekennzeichnet, dass** die Umformung im Spreizbereich (15) über eine axiale Spreizbereichslänge (16) erfolgt, die dem 0,3- bis 3-fachen der Wanddicke (D4) des Rohrs (2) entspricht.

5. Verfahren nach einem der Ansprüche 1 bis 4, **dadurch gekennzeichnet, dass** das Außenwerkzeug (3) über den Außenumfang des Rohrs (2) verteilt mehrere radial verlagerbare Außenwerkzeugsegmente (7) aufweist, welche das Rohr (2) beim Spreizen umschließen.

6. Verfahren nach Anspruch 5, **dadurch gekennzeichnet, dass** ein kegelförmiger Stützabschnitt (23) entweder an den Außenwerkzeugsegmenten (7) oder an einem von den Außenwerkzeugsegmenten getrennten Stützwerkzeug vorgesehen sind, wobei der Aufweitkegel (5) den Kegelformbereich (22) des Rohrs (2) zumindest auf einem Teil seiner axialen Länge gegen den Stützabschnitt (23) presst.

7. Verfahren nach einem der Ansprüche 1 bis 6, **dadurch gekennzeichnet, dass** der Aufweitkegel (5) tiefer in das Rohr (2) eingeführt wird als der Aufweitkegel (5) in Axialrichtung lang ist, um einen nicht-kegeligen Endabschnitt (28) am Rohr (2) auszubilden.

8. Formvorrichtung (1) zur Durchführung des Verfahrens gemäß einem der Ansprüche 1 bis 7 mit folgenden Merkmalen:
a. Wenigstens ein Innenwerkzeug (4, 4a, 4b), um ein Rohr (2) durch plastische Umformung von innen radial bereichsweise aufzuweiten;
b. Das Innenwerkzeug (4) oder wenigstens eines der mehreren Innenwerkzeuge (4a) weist einen Aufweitkegel (5) auf, der dazu eingerichtet und ausgebildet ist, an dem Rohr (2) einen Kegelformbereich (22) durch axiales Verlagern relativ zum Rohr (2) auszuformen;
c. Das Innenwerkzeug (4) mit dem Aufweitkegel (5) weist ein Spreizwerkzeug (6) auf, das dem Aufweitkegel (5) vorgelagert ist, oder eines der weiteren Innenwerkzeuge (4b) weist das Spreizwerkzeug (6) auf, wobei ein Außendurchmesser (D1) des Spreizwerkzeugs (6) kleiner ist als ein Innendurchmesser (D2) des Rohrs (2), und wobei das Spreizwerkzeug (6) dazu eingerichtet und ausgebildet ist, das Rohr (2) in einem dem Kegelformbereich (22) benachbarten Spreizbereich (15) radial innenseitig plastisch umformend aufzuweiten;
d. Ein Außenwerkzeug (3), welches dazu eingerichtet und ausgebildet ist, das Rohr (2) in dem Spreizbereich (15) radial außenseitig abzustützen;
e. Ein axial verlagerbarer Spreizdorn (10), welcher im Wirkeingriff mit Spreizsegmenten (12) des Spreizwerkzeuges (6) steht, um die Spreizsegmente (12) radial gegen die Innenseite des Rohrs (2) zu drücken;
**dadurch gekennzeichnet, dass**
f. das Spreizwerkzeug (6) des Innenwerkzeugs (4, 4a), das den Aufweitkegel (5) aufweist, in einem axialen Abstand (A1) vom Aufweitkegel (5) angeordnet ist, der größer oder gleich null ist und das Dreifache einer Wanddicke (D4) des umzuformenden Rohrs (2) nicht überschreitet.

9. Formvorrichtung (1) nach Anspruch 8, **dadurch gekennzeichnet, dass** die Spreizsegmente (12) eine axiale Spreizbereichslänge (16) besitzen, die dem 0,5- bis 3-fachen einer Wanddicke (D4) des umzuformenden Rohrs (2) entspricht.

10. Formvorrichtung (1) nach Anspruch 9, **dadurch gekennzeichnet, dass** die Spreizelemente (12) gerundete Endbereiche (17, 18) oder gefaste Endbereiche aufweisen.

11. Formvorrichtung (1) nach einem der Ansprüche 8 bis 9, **dadurch gekennzeichnet, dass** das Außenwerkzeug (3) einen kegelförmigen Stützabschnitt (23) aufweist, der zur Formgebung des Kegelformbereichs (22) während des Aufweitens durch den Aufweitkegel (5) bestimmt ist.
